# FASCICULE DE BREVET EUROPEEN

(11) **EP 0 934 696 B1**
(45) Date de publication et mention de la délivrance du brevet: **03.09.2003**
(21) Numéro de dépôt: 99400193.1
(22) Date de dépôt: 28.01.1999
(51) Int. Cl.: A01K 7/06

(54) **Abreuvoir individuel à connexion pluridirectionnelle du genre comportant un bol et une robinetterie**
Becken-Ventil Einzeltränke mit Mehrrichtungsverbindung
Multi-directionally connectable individual drinker including a bowl and a valve unit

(30) Priorité: 06.02.1998 FR 9801397
(43) Date de publication de la demande: 11.08.1999
(73) Titulaire: La Buvette, 08090 Tournes (FR)
(72) Inventeur: Gustin, Jean-Pierre, 08000 Charleville Mesieres (FR)
(74) Mandataire: Loyer, Bertrand

(56) Documents cités:
- EP-A- 0 486 373
- DE-A- 3 721 467

## Description

La présente invention concerne un abreuvoir pour le bétail destiné à être installé à a l'intérieur, dans une étable, aussi bien qu'à l'extérieur, dans un pré.

De manière connue en soi, de tels abreuvoirs sont constitués d'un bol globalement demi-sphérique comportant une face arrière plane dépassant vers le haut par laquelle ils sont positionnés et fixés sur une paroi ou un tube, et sur lequel est positionnée une robinetterie.

La robinetterie comporte un organe de manoeuvre s'étendant globalement verticalement dans le bol. Cet organe de manoeuvre peut être une palette ou une tubulure raccordée à la robinetterie de manière telle que le clapet d'arrivée d'eau soit ouvert dès qu'un animal appuie sur le moyen de manoeuvre. Lorsque le moyen de manoeuvre est une tubulure, celle-ci peut être déplacée dans une multitude de direction autour de sa position de repos de manière à ouvrir le clapet d'arrivée d'eau.

La robinetterie est solidaire d'un raccord à angle droit ou d'un raccord en T monté sur le tuyau d'arrivée d'eau.

De nombreuses dispositions ont déjà été proposées de manière à faciliter le montage de l'abreuvoir sur son support et surtout de manière à faciliter le montage de la robinetterie sur le bol et son raccordement au tuyau d'arrivée d'eau.

Usuellement, l'extrémité de la robinetterie traverse un orifice pratiqué dans la paroi arrière du bol, et l'épaulement raccordant le bol à la face arrière de montage est séparé en deux parties de manière à laisser un logement libre dans lequel est disposé le raccord lorsque l'arrivée d'eau se fait par le dessus de l'abreuvoir.

Un tel abreuvoir est décrit dans le document EP 0486 373 A.

Ces divers aménagements permettent de monter et démonter facilement la robinetterie tout en laissant le bol fixé à son support afin de faciliter les travaux de maintenance.

La présente invention tend à proposer un abreuvoir tel que l'on puisse suivant les besoins soit désolidariser la robinetterie du tuyau d'arrivée d'eau sans devoir déposer le bol, soit déposer le bol sans devoir désolidariser la robinetterie du tuyau d'arrivée d'eau, cet abreuvoir présente de plus l'avantage de pouvoir être raccordé suivant cinq directions possibles à une tubulure d'alimentation en eau.

A cet effet, l'invention propose un abreuvoir selon la revendication 1.

L'abreuvoir selon l'invention est encore remarquable en ce que :
- le bord supérieur de la paroi présente une échancrure destinée à laisser le passage à la portion d'extrémité du corps de robinetterie devant être fixée au raccord,
- le corps de robinetterie est bordé par deux oreilles destinées à être positionnées contre la face avant de la paroi, et à permettre la fixation de la robinetterie à ladite paroi par la mise en place de boulons,
- l'épaulement présente, en regard de la cuvette, une ouverture rectangulaire bordée par un fond et des faces latérales raccordées à la paroi arrière de la cuvette, de manière à créer un renfoncement,
- la paroi est disposée dans le prolongement du fond dudit renfoncement,
- lorsque l'épaulement et la face arrière sont en deux parties définissant entre elles un logement libre, ladite paroi ferme ledit logement libre,
- le corps de robinetterie est traversé par un boisseau cylindrique monté tournant et présentant une lumière trapézoïdale dont la position par rapport à un alésage du corps de robinetterie assure le réglage du débit d'eau dans la robinetterie.

L'invention sera mieux comprise grâce à la description qui va suivre, donnée à titre d'exemple non limitatif en référence aux dessins annexés dans lesquels :
- la figure 1 est une vue en perspective de l'abreuvoir suivant l'invention,
- la figure 2 est une vue en coupe suivant la ligne II-II de la figure 1.

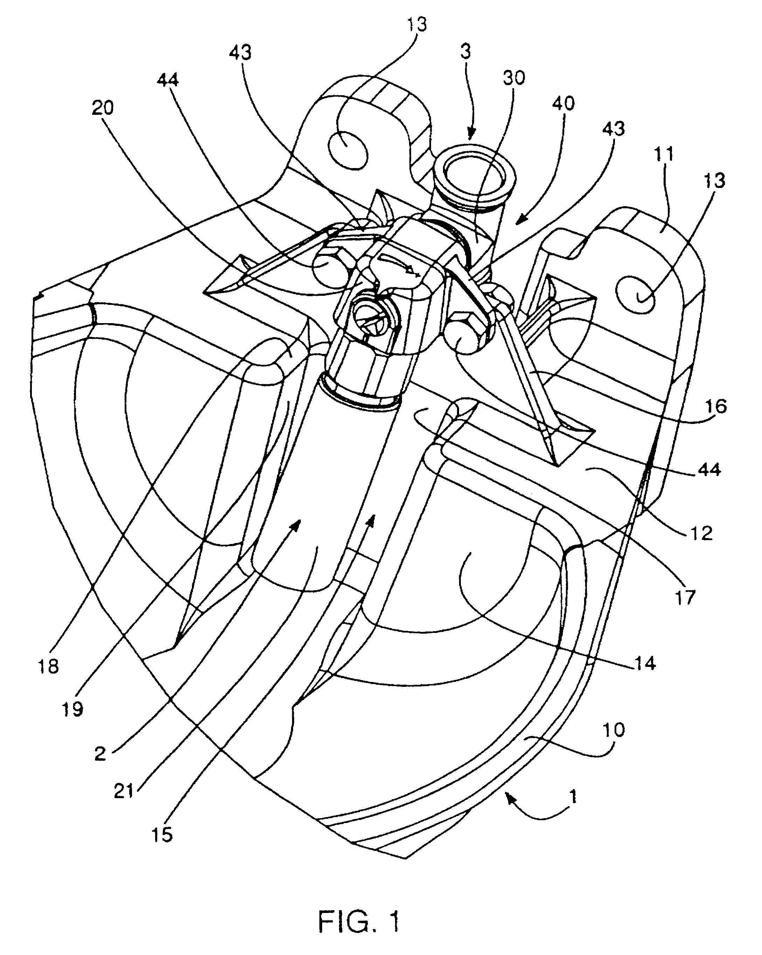

Comme visible à la figure 1, l'abreuvoir selon l'invention comporte de manière connue en soi un bol 1 constitué d'une cuvette 10 globalement demi-sphérique se raccordant par un épaulement 12 à une face arrière 11.

Le bol 1 est destiné à être fixé avec la face ouverte de la cuvette 10 dans un plan sensiblement horizontal, l'épaulement 12 étant également sensiblement horizontal tandis que la face arrière 11 est sensiblement verticale et est fixée sur une paroi ou un tube contre laquelle elle est disposée. Les moyens de fixation du bol 1, non représentés au dessin, sont constitués par des boulons ou par les extrémités d'un étrier disposés dans les ouvertures 13 de la face arrière 11.

L'épaulement 12 présente, en regard de la cuvette 10, une ouverture rectangulaire 18 bordée par un fond 17 et des faces latérales 19 raccordées à la paroi arrière 14 de la cuvette 10, de manière à créer un renfoncement 15.

La robinetterie 2 est disposée de manière à être positionnée près de la paroi arrière 14 du bol 10, dans le renfoncement 15, et pratiquement parallèle à ladite paroi arrière. Ladite robinetterie 2 est solidarisée à un raccord 3 en T destiné à être monté sur le tuyau d'arrivée d'eau non représenté au dessin.

De manière connue en soi, l'épaulement 12 et la face arrière 11 sont séparés en deux parties afin de laisser un logement libre 40 dans lequel s'étend la partie supérieure du raccord 3 destinée à être solidarisée au tuyau d'arrivée d'eau lorsque celui-ci est disposé au-dessus de l'abreuvoir.

La robinetterie 2 représentée au dessin comporte un corps de robinetterie 20 destiné à être solidarisé au raccord 3 et un organe de manoeuvre 21 constitué par un embout démontable sur lequel les animaux agissent. Le corps de robinetterie 20 renferme le clapet d'arrivée d'eau constitué par un obturateur 22 repoussé en appui sur un siège 23 par un ressort de rappel 24.

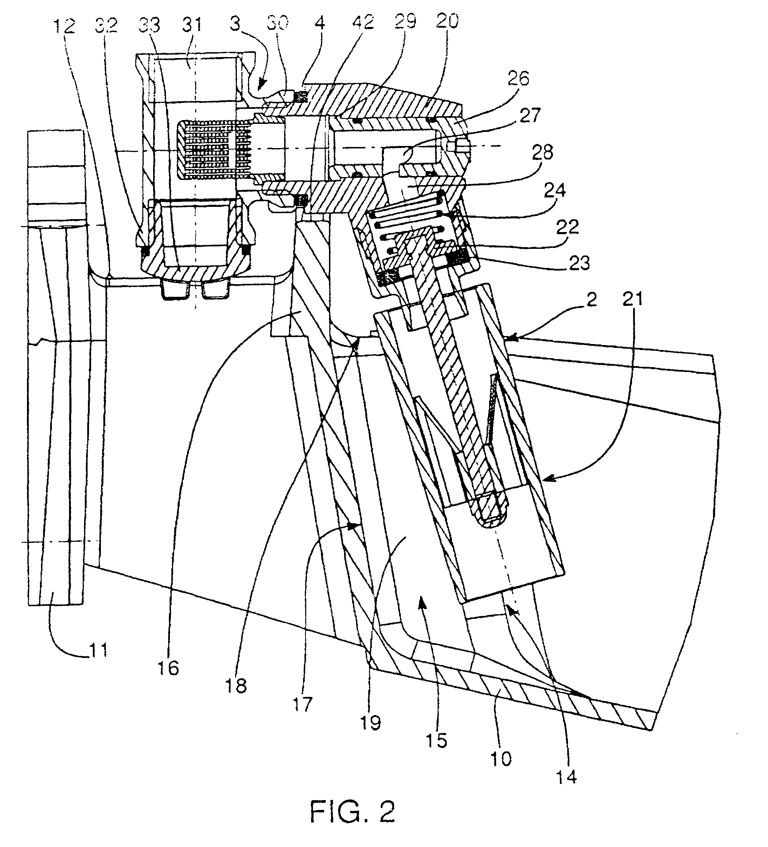

Comme visible sur la figure 2, le corps de robinetterie 20 est traversé par un boisseau cylindrique 26 monté tournant dont l'extrémité située à l'opposé du raccord 3 est fermée tandis que l'extrémité située près dudit raccord 3 est ouverte et présente une collerette évasée 29. Ladite collerette 29 assure la retenue du boisseau 26 dans le corps de robinetterie.

Le boisseau cylindrique 26 présente une lumière 27 trapézoïdale permettant le réglage du débit de l'eau admise dans la robinetterie. Le montage tournant du boisseau 26 dans le corps de robinetterie 20 permet d'orienter ledit boisseau de manière à adapter la position de la lumière 27 par rapport à l'alésage 28 au débit d'eau que l'on désire obtenir dans la robinetterie. La forme trapézoïdale de la lumière 27 et le fait qu'elle ne s'étend pas sur toute la circonférence du boisseau 26, permettent de régler à volonté le débit d'eau dans la robinetterie entre un débit nul et un débit maximum fixé par la pression dans la tubulure d'amenée d'eau et le diamètre de l'alésage 28.

Une telle disposition peut être manoeuvrée en toute sécurité. Il n'y a pas, comme dans les dispositions connues mettant en oeuvre une vis d'obturation du débit, de risque de perte ou de casse du moyen d'obturation.

Suivant l'invention, une paroi 16 est prévue solidaire de l'épaulement 12, perpendiculaire audit épaulement 12 et parallèle à la face arrière 11. Cette paroi 16 est disposée dans le prolongement du fond 17 du renfoncement 15 et ferme ainsi le logement libre 40.

Le bord supérieur de la paroi 16 présente une échancrure 42 destinée à laisser le passage à la portion d'extrémité 25 du corps de robinetterie 20 devant être fixée au raccord 3.

Comme on peut le constater sur la figure 2, le corps de robinetterie 20 est disposé dans l'échancrure 42 de la paroi 16 avec jeu.

Comme visible à la figure 1, la portion d'extrémité 25 du corps de robinetterie 20 est bordée par deux oreilles 43 destinées à être positionnées contre la face avant de la paroi 16, et à permettre la fixation de la robinetterie à ladite paroi 16 par la mise en place de boulons 44 traversants. La paroi 16 étant positionnée dans le prolongement du fond 17 du renfoncement 15, la robinetterie 2 fixée à ladite paroi 16 est convenablement disposée dans ledit renfoncement 15.

Par un tel montage, il est possible d'effectuer la plomberie, c'est-à-dire le montage de la robinetterie 2 sur le raccord 3 fixé au tuyau d'arrivée d'eau, non représenté au dessin, indépendamment, soit avant, soit après, le montage du bol 1 sur la paroi ou le tube qui doit le supporter.

La plomberie et le bol ne sont solidarisés que par la mise en place des boulons 44 à travers les oreilles 43 du corps de robinetterie 20 et la paroi 16. Cette solidarisation est très simple à effectuer du fait que les boulons utilisés traversent les ouvertures de la paroi 16 et sont facilement accessibles, elle est peu sujette au grippage contrairement aux montages mettant en oeuvre des vis positionnés dans la fonte. De plus, cette solidarisation peut être effectuée à plusieurs moments au cours du montage selon la préférence du monteur. On peut ainsi choisir de monter le bol et de ne lui solidariser le corps de robinetterie qu'après avoir terminé le montage de la robinetterie sur le tuyau d'arrivée d'eau afin de faciliter la réalisation de la plomberie.

La disposition suivant l'invention est surtout intéressante lors des interventions à effectuer sur l'abreuvoir car il est possible de désolidariser la robinetterie du bol en enlevant les boulons 44 et de démonter suivant les besoins, soit la robinetterie, soit le bol, en laissant l'autre en place.

Dans la disposition suivant l'invention, la portion d'extrémité 25 du corps de robinetterie se trouve située à la fois au-dessus de l'épaulement 12 et de l'espace libre 40, ce qui facilite la mise en place du raccord 3 et permet son orientation suivant différentes directions.

Dans le montage représenté au dessin, le raccord 3 est monté avec ses branches 31 et 32, qui sont dans le prolongement l'une de l'autre, orientées verticalement. L'extrémité de la branche supérieure 31 est ouverte pour permettre la liaison au tuyau d'arrivée d'eau, tandis que l'extrémité de la branche inférieure 32 est fermée par un bouchon 33.

En variante, lesdites branches 31 et 32 peuvent être disposées horizontalement dans l'espace disposé au-dessus de l'épaulement 12, entre la face arrière 11 et la paroi 16.

Le raccord 3 à trois branches peut, de manière connue en soi être remplacé par un raccord à deux branches disposées à angle droit.

Suivant une autre variante, le tuyau d'arrivée d'eau peut être disposé horizontalement et raccordé à la robinetterie par un manchon droit monté à travers le logement libre 40.

L'abreuvoir suivant l'invention peut ainsi avoir cinq directions de branchement possibles.

## Revendications

1. Abreuvoir individuel à connexion pluridirectionnelle, du genre comportant un bol (1), constitué par une cuvette (10) raccordée à une face arrière (11) de fixation à une paroi ou un tube par un épaulement (12) ; et une robinetterie (2), constituée d'un corps de robinetterie (20) et d'un organe de manoeuvre (21), destinée à être raccordée à une tubulure d'amenée d'eau au moyen d'un raccord (3), **caractérisé en ce que** l'abreuvoir porte, disposée entre la cuvette (10) et la face arrière (11), une paroi (16) de fixation de la robinetterie (2) ; ladite paroi (16) solidaire de l'épaulement (12) étant perpendiculaire audit épaulement (12) et parallèle à la face arrière (11) de fixation à une paroi ou tube ; ladite paroi 16) sur laquelle est fixée la robinetterie (2) étant conformée pour laisser le passage de la portion d'extrémité (25) du corps de robinetterie (20) devant être fixée au raccord (3), de sorte que ledit raccord (3) peut être disposé suivant au moins cinq directions.

2. Abreuvoir selon la revendication 1, **caractérisé en ce que** le bord supérieur de la paroi (16) présente une échancrure (42) destinée à laisser le passage à la portion d'extrémité (25) du corps de robinetterie (20) devant être fixée au raccord (3).

3. Abreuvoir selon l'une quelconque des revendications 1 ou 2, **caractérisé en ce que** le corps de robinetterie (20) est bordé par deux oreilles (43) destinées à être positionnées contre la face avant de la paroi (16), et à permettre la fixation de la robinetterie à ladite paroi (16) par la mise en place de boulons (44).

4. Abreuvoir selon l'une quelconque des revendications 1 à 3, **caractérisé en ce que** l'épaulement (12) présente, en regard de la cuvette (10), une ouverture rectangulaire (18) bordée par un fond (17) et des faces latérales (19) raccordées à la paroi arrière (14) de la cuvette (10), de manière à créer un renfoncement (15).

5. Abreuvoir selon la revendication 4, **caractérisé en ce que** la paroi (16) est disposée dans le prolongement du fond (17) dudit renfoncement (15).

6. Abreuvoir selon l'une quelconque des revendications précédentes dans lequel l'épaulement (12) et la face arrière (11) sont en deux parties définissant entre elles un logement libre (40), **caractérisé en ce que** ladite paroi (16) ferme le logement libre (40).

7. Abreuvoir selon l'une quelconque des revendications précédentes, **caractérisé en ce que** le corps de robinetterie (20) est traversé par un boisseau cylindrique (26) monté tournant et présentant une lumière (27) trapézoïdale dont la position par rapport à un alésage (28) du corps de robinetterie (20) assure le réglage du débit d'eau dans la robinetterie.

## Patentansprüche

1. Einzeltränke mit Mehrrichtungsverbindung, der Art mit einem Behälter (1), der durch eine Schale (10) gebildet ist, die mit einer hinteren Fläche (11) zur Befestigung an einer Wand oder einem Rohr mittels einer Schulter (12) verbunden ist, und mit einer Armatur (2), die durch einen Armaturenkörper (20) und ein Betätigungsorgan (21) gebildet ist, wobei die Armatur dazu bestimmt ist, an einem Wasserzuführkanal mittels einer Verbindung (3) angeschlossen zu werden, **dadurch gekennzeichnet, daß** die Tränke eine zwischen der Schale (10) und der hinteren Fläche (11) angeordnete Wand (16) zur Befestigung der Armatur (2) aufweist, wobei die Wand (16) fest mit der Schulter (12) verbunden ist und senkrecht zur Schulter (12) sowie parallel zur hinteren Fläche (11) zur Befestigung an einer Wand oder einem Rohr verläuft, und wobei die Wand (16), auf der die Armatur (2) befestigt wird, so ausgebildet ist, daß sie ein Hindurchführen des an der Verbindung (3) zu befestigenden Endabschnittes (25) des Armaturenkörpers (20) zuläßt,
derart, daß die Verbindung (3) nach mindestens fünf Richtungen hin angeordnet werden kann.

2. Tränke nach Anspruch 1, **dadurch gekennzeichnet, daß** der obere Rand der Wand (16) eine Aussparung (42) aufweist, die dazu bestimmt ist, ein Hindurchführen des an der Verbindung (3) zu befestigenden Endabschnittes (25) des Armaturenkörpers (20) zuzulassen.

3. Tränke nach einem der Ansprüche 1 oder 2, **dadurch gekennzeichnet, daß** der Armaturenkörper (20) von zwei Ösen (43) eingefaßt ist, die dazu dienen, an der vorderen Fläche der Wand (16) angeordnet zu werden und die Befestigung der Armatur an der Wand (16) durch Anbringen von Bolzen (44) zu gestatten.

4. Tränke nach einem der Ansprüche 1 bis 3, **dadurch gekennzeichnet, daß** die Schulter (12) gegenüber der Schale (10) eine rechteckige Öffnung (18) aufweist, die von einem Boden (17) und von mit der Rückwand (14) der Schale (10) verbundenen Seitenflächen (19) derart eingefaßt ist, daß ein Rücksprung (15) gebildet wird.

5. Tränke nach Anspruch 4, **dadurch gekennzeichnet, daß** die Wand (16) in der Verlängerung des Bodens (17) des Rücksprungs (15) angeordnet ist.

6. Tränke nach einem der vorhergehenden Ansprüche, bei der die Schulter (12) und die hintere Fläche (11) in zwei Teilen ausgebildet sind, die zwischen sich eine freie Aufnahme (40) bilden, **dadurch gekennzeichnet, daß** die Wand (16) die freie Aufnahme (40) verschließt.

7. Tränke nach einem der vorhergehenden Ansprüche, **dadurch gekennzeichnet, daß** durch den Armaturenkörper (20) ein zylindrischer Hahn (26) hindurchläuft, der verdrehbar montiert ist und einen trapezförmigen Schlitz (27) aufweist, dessen Stellung relativ zu einer Bohrung (28) im Armaturenkörper (20) das Regulieren des Wasserdurchflusses in der Armatur sicherstellt.

## Claims

1. An individual drinker with a multi-directional connection, of the type comprising a bowl (1), constituted by a basin (10) connected to a rear face (11) for fastening to a wall or a tube by a shoulder (12), and a valve system (2), consisting of a valve system body (20) and an actuating element (21), which system is intended to be connected to a water feed tube by means of a connector (3), **characterised in that** the drinker bears, arranged between the basin (10) and the rear face (11), a wall (16) for fastening the valve system (2); said wall (16) integral with the shoulder (12) being perpendicular to said shoulder (12) and parallel to the rear face (11) for fastening to a wall or tube; said wall (16) on which the valve system (2) is fixed being shaped to allow passage of the end portion (25) of the valve system body (20) which has to be fastened to the connector (3), such that said connector (3) may be arranged in at least five directions.

2. A drinker according to Claim 1, **characterised in that** the upper edge of the wall (16) has a cutout (42) which is intended to allow passage of the end portion (25) of the valve system body (20) which has to be fastened to the connector (3).

3. A drinker according to either one of Claims 1 or 2, **characterised in that** the valve system body (20) is bordered by two lugs (43) intended to be positioned against the front face of the wall (16), and to permit fastening of the valve system to said wall (16) by inserting pins (44).

4. A drinker according to any one of Claims 1 to 3, **characterised in that** the shoulder (12) has, opposite the basin (10), a rectangular opening (18) bordered by a back (17) and lateral faces (19) connected to the rear wall (14) of the basin (10), so as to create a recess (15).

5. A drinker according to Claim 4, **characterised in that** the wall (16) is arranged in the extension of the back (17) of said recess (15).

6. A drinker according to any one of the preceding claims, in which the shoulder (12) and the rear face (11) are in two parts defining between them a free housing region (40), **characterised in that** said wall (16) closes the free housing region (40).

7. A drinker according to any one of the preceding claims, **characterised in that** a rotatably mounted cylindrical barrel (26) having a trapezoidal port (27), the position of which relative to a bore (28) in the valve system body (20) regulates the flow of water through the valve system, passes through the valve system body (20).
